(19) Europäisches Patentamt
European Patent Office
Office européen des brevets

(11) EP 1 735 375 B1

(12) **EUROPÄISCHE PATENTSCHRIFT**

(45) Veröffentlichungstag und Bekanntmachung des Hinweises auf die Patenterteilung:
**15.05.2013 Patentblatt 2013/20**

(21) Anmeldenummer: **05716273.7**

(22) Anmeldetag: **22.03.2005**

(51) Int Cl.:
***C08K 3/32*** *(2006.01)*

(86) Internationale Anmeldenummer:
**PCT/EP2005/003009**

(87) Internationale Veröffentlichungsnummer:
**WO 2005/097881 (20.10.2005 Gazette 2005/42)**

(54) **QUELLBARE HYDROGELBILDENDE POLYMERE MIT HOHER PERMEABILITÄT**
HIGHLY PERMEABLE SWELLABLE HYDROGEL-FORMING POLYMERS
POLYMERES EXPANSIBLES A PERMEABILITE ELEVEE FORMANT DE L'HYDROGEL

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **29.03.2004 DE 102004015686**

(43) Veröffentlichungstag der Anmeldung:
**27.12.2006 Patentblatt 2006/52**

(73) Patentinhaber: **BASF SE**
**67056 Ludwigshafen (DE)**

(72) Erfinder:
- **RIEGEL, Ulrich**
  **66849 Landstuhl (DE)**
- **DANIEL, Thomas**
  **67165 Waldsee (DE)**
- **WEISMANTEL, Matthias**
  **63637 Jossgrund (DE)**
- **ELLIOTT, Mark**
  **67063 Ludwigshafen (DE)**
- **HERMELING, Dieter**
  **67459 Böhl-Iggelheim (DE)**

(56) Entgegenhaltungen:
**US-A- 5 641 561**

EP 1 735 375 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft quellbare hydrogelbildende Polymere mit hoher Permeabilität, ein Verfahren zur Herstellung quellbarer hydrogelbildender Polymere mit hoher Permeabilität sowie deren Verwendung.

Quellbare hydrogelbildende Polymere, sogenannte Superabsorber (Super-Absorbing Polymers, SAP), sind aus dem Stand der Technik bekannt.

Quellbare hydrogelbildende Polymere sind insbesondere Polymere aus (co)polymerisierten hydrophilen Monomeren, Pfropf(co)polymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate. Solche Polymere werden als wässrige Lösungen absorbierende Produkte zur Herstellung von Windeln, Tampons, Damenbinden und anderen Hygieneartikein, aber auch als wasserzurückhaltende Mittel im landwirtschaftlichen Gartenbau oder zur Verdickung aller Arten von Abfällen, insbesondere von medizinischen Abfällen, verwendet.

Quellbare hydrogelbildende Polymere sind bevorzugt solche mit einer Absorption von 0,9 gew.-%iger Kochsalzlösung von mindestens dem 10-fachen Eigengewicht bezogen auf das eingesetzte Polymer, bevorzugt dem 20-fachen Eigengewicht. Diese Absorption wird bevorzugt auch unter einem Druck beispielsweise von 0,7 psi erreicht.

Zur Verbesserung der Anwendungseigenschaften werden quellbare hydrogelbildende Polymere üblicherweise oberflächen- oder gelnachvernetzt. Diese Nachvernetzung ist dem Fachmann an sich bekannt und erfolgt bevorzugt in wässriger Gelphase oder als Oberflächennachvernetzung der gemahlenen und abgesiebten Polymerpartikel.

Die Patentanmeldung WO-A-02/060983 beschreibt Superabsorberpartikel, die mit einem wasserunlöslichen Metallphosphat nachbehandelt werden. Dabei werden Metallphosphatpartikel mit der Oberfläche der Superabsorberpartikel assoziert. Dadurch werden Superabsorber mit hoher Absorptionskapazität, verbesserten Flüssigkeitstransporteigenschaften und hoher Anquellgeschwindigkeit erhalten. Die Metallphosphatpartikel haben vorzugsweise eine mittlere Teilchengröße von 2 bis 7 $\mu$m, d.h. durch Abrieb der Metallphosphatpartikel kann ein nicht unerheblicher Staubanteil entstehen.

Während der Herstellung und Verarbeitung von Superabsorbern kommt es durch abrasive Prozesse zur Abrundung der Partikel, wobei Abrieb erzeugt wird, dies gilt insbesondere dann, wenn die Superabsorberpartikel mit einem wasserunlöslichen Metallphosphat nachbehandelt werden. Der erzeugte Abrieb führt zu Verstopfungen von Filtern, klebrigen Ablagerungen, Verklumpungen und erheblichen Schwierigkeiten bei der Förderung des Superabsorbers. Durch die große Oberfläche des Abriebs kommt es zu schneller Feuchtigkeitsaufnahme aus der Umgebung und Verklebung des Niederschlags, was zur Verunreinigung der Produktionsanlagen führt. Innerhalb pneumatischer Fördersysteme bilden sich weiterhin hade,Staubagglomerate. Weiterhin ist der feine Abrieb vom hygienischen und arbeitsmedizinischen Aspekt äußerst unerwünscht.

Der Abrieb führt, wenn er nicht speziell abgetrennt wird, entweder bei der Superabsorberherstellung oder vor dem Einbringen des Polymers in einen Hygieneartikel zu Problemen sowie durch die fehlenden Metallphosphate auf der Oberfläche der Superabsorberpartikel zu einer stark verringerten Permeabilität (SFC) des Gels bei der Anwendung. Dies führt dann zu erhöhten Leckraten.

In den Patentanmeldungen WO-A-92/13912, WO-A-94/22940 und EP-A-0 679 678 wurden Verfahren zur Entstaubung von Superabsorbern vorgeschlagen.

WO-A-92/13912 und WO-A-94/22940 beschreiben die Entstaubung von Superabsorbern durch oberflächliche Beschichtung mit Polyethylenglykolen. Polyethylenglykole haben den Nachteil, dass sie als lineare und wasserlösliche Polymere die Viskosität der die Gelpartikel umgebenden Lösung stark erhöhen und so deren Fliessfähigkeit verringern. Dies führt in der Anwendung im Hygieneartikel zu verschlechterter Flüssigkeitsweiterleitung (SFC) im gequollenen Gel.

EP-A-0 679 678 beschreibt ein Verfahren, bei dem der Staubanteil eines pulverförmigen Superabsorbers durch Nachbehandlung mit Silikonen gesenkt wird. Die Schrift empfiehlt auch die Verwendung zusätzlicher Entstaubungsmittel, wie beispielsweise Polyglykole und Polyglykolether. Silikone hydrophobieren den Superabsorber in unerwünschter Weise und verringern so die Quellgeschwindigkeit.

Weiterhin wird in der Patentanmeldung EP-A-0 755 964 die Oberflächenbeschichtung von Superabsorbern mit unlöslichen Wachsen beschrieben. Die verwendeten Wachse hydrophobieren den Superabsorber jedoch teilweise und sind nur schwer ohne Hilfsmittel dispergierbar. Die üblicherweise für diese Zwecke eingesetzten Dispergierhilfsmittel haben aber tensidischen Charakter und setzen die Oberflächenspannung der im Hygieneartikel eingeschlossenen Flüssigkeit herab, was wiederum zum Auslaufen führen kann.

Die Fixierung von Superabsorberpartikeln an Fasern unter Einsatz geeigneter polymerer und nicht-polymerer Bindemittel ist in den Patentschriften US 5,641,561 sowie US 5,589,256 beschrieben. Das Bindemittel soll in der Lage sein über Wasserstoffbrückenbindungen die Superabsorberpartikel an die Fasern im Hygieneartikel zu binden. Der unter Umständen negative Einfluss des Bindemittels auf die Flüssigkeitsleitfähigkeit des gequollenen Gels, insbesondere im Hinblick auf die offenbarten polymeren Bindemittel, oder die Oberflächenspannung der im Hygieneartikel eingeschlossenen Flüssigkeit wird weder erwähnt noch wird eine Lösung dieser Probleme offenbart. Hinsichtlich der nicht-polymeren

Bindemittel ist auch hervorzuheben, dass diese als Lösemittel in Hygieneartikeln wegen der Ausdünstungen im Gebrauchszustand und der Wirkung auf die Haut nicht sehr erwünscht sind. Eine Lehre zur Minimierung solcher Lösemittel bei gleichzeitiger Entstaubung und Fixierung der Partikel an die Faser wird nicht offenbart.

Keine der vorgenannten Schriften enthält einen Hinweis, wie die Haftung wasserunlöslicher Metallphosphate auf der Oberfläche von Superabsorberpartikeln verbessert werden kann.

Es bestand daher die Aufgabe ein Verfahren zur Herstellung von quellbaren hydrogelbildenden Polymeren, sogenannten Superabsorbern, zur Verfügung zu stellen, bei dem ein Superabsorber mit hoher Permeabilität erhalten wird und bei dem weder das Quellverhalten noch die Flüssigkeitsweiterleitung gegenüber dem unbehandelten Superabsorber verschlechtert wird.

Eine weitere zu lösende Aufgabe war ein Verfahren zur Herstellung von Superabsorbern zur Verfügung zu stellen, bei dem die Superabsorber mit pulverförmigen und/oder staubförmigen Additiven nachbehandelt werden und bei dem die Superabsorber einen niedrigen Staub- bzw. Abriebanteil aufweisen.

Eine weitere zu lösende Aufgabe war ein Verfahren zur Herstellung von quellbaren hydrogelbildenden Polymeren zur Verfügung zu stellen, bei dem ein Superabsorber erhalten wird, bei dem der Staub- bzw. Abriebanteil auch bei mechanischer Belastung nicht oder nur geringfügig ansteigt. Als Staub- bzw. Abrieb werden Teilchen mit einem Durchmesser von weniger als 10 µm bezeichnet.

Eine weitere zu lösende Aufgabe war ein Verfahren zur Herstellung von Superabsorbern zur Verfügung zu stellen, wobei die Superabsorber mit mindestens einem pulverförmigen und/oder staubförmigen wasserunlöslichem Metallphosphat nachbehandelt werden, und bei dem ein Superabsorber mit geringem Staub- bzw. Abriebanteil erhalten wird, bei dem weder das Quellverhalten noch die Flüssigkeitsweiterleitung gegenüber dem unbehandelten Superabsorber verschlechtert ist, d.h. die pulverförmigen und/oder staubförmigen wasserunlöslichem Metallphosphate sollen optimal an die Superabsorberpartikel gebunden werden.

Eine weitere zu lösende Aufgabe war ein Verfahren zur Herstellung von Superabsorbern zur Verfügung zu stellen, bei dem Superabsorber mit optimierten Förderverhalten erhalten werden. Dabei sollten die Superabsorber eine gewisse Klebrigkeit aufweisen, um beispielsweise problemlos mit Förderschnecken dosiert werden zu können, ohne das die Verbackungsneigung, insbesondere bei hoher Luftfeuchtigkeit, zunimmt.

Überraschend wurde nun gefunden, dass durch Verwendung hydrophiler Polymere mit dendritischer Struktur bei der Herstellung quellbarer hydrogelbildender Polymere Superabsorber mit geringem Abriebanteil, insbesondere auch nach mechanischer Belastung, einem verbesserten Bindevermögen an pulverförmige und/oder staubförmige Additive, hoher Anquellgeschwindigkeit, hoher Flüssigkeitsweiterleitung und optimalem Fließverhalten erhalten werden.

Dendritische Polymere sind nach Römpp, Lexikon-Chemie, Georg Thieme Verlag, Stuttgart, 10. Auflage, Seite 898, synthetische Makromoleküle, die durch schrittweise Verknüpfung von jeweils zwei oder mehr Monomeren mit jedem bereits gebundenen Monomeren aufgebaut werden, so dass mit jedem Schritt die Zahl der Monomer-Endgruppen exponentiell anwächst und am Ende eine kugelförmige Baumstruktur entsteht.

Erfindungsgemäß einsetzbare hydrophile Polymere mit dendritischer Struktur sind Polyole mit mindestens 8, vorzugsweise mindestens 16, besonders bevorzugt mindestens 32, Hydroxylgruppen und einem nichtlinearen, vorzugsweise mindestens 14fach verzweigten, besonders bevorzugt 30fach verzweigten, Grundgerüst.

Hydrophile Polymere mit dendritischer Struktur sind beispielsweise Polyester, die ausgehend von einem Polyol durch Veresterung mit einer $C_3$-$C_{20}$-Hydroxycarbonsäure, vorzugsweise mit einer $C_4$-$C_{12}$-Hydroxycarbonsäure, besonders bevorzugt mit einer $C_5$-$C_8$-Hydroxycarbonsäure, erhalten werden, wobei die Hydroxycarbonsäure mindestens zwei Hydroxylgruppen, vorzugsweise zwei Hydroxylgruppen, und/oder mindestens zwei Carbonsäuregruppen aufweist. Besonders bevorzugt sind Hydroxycarbonsäuren mit zwei Hydroxylgruppen und einer Carbonsäuregruppe, insbesondere 2,2-Dimethylolpropionsäure. Polyole sind Verbindungen mit mindestens zwei Hydroxylgruppen, wie beispielsweise Ethylenglykol, Diethylenglykol, Triethylenglykol, Polyethylenglykol, Propylenglykol, Dipropylenglykol, Tripropylenglykol, Polypropylenglykol, Butylenglykol, 1,3-Propandiol, 1,4-Butandiol, Bisphenol A, Glycerin, Trimethylolpropan, Pentaerythrit und/oder Sorbitol. Bevorzugt sind dentritische Polyester, besonders bevorzugt sind Boltorn® 20, Boltorn® 30, Boltorn® 40 und Boltorn® 310 (Perstorp Specialty Chemicals AB, SE).

Zu den erfindungsgemäß verwendbaren hydrophilen Polymeren mit dendritischer Struktur zählen auch Polymere, die durch Kondensation von Polyolen mit mindestens drei Hydroxylgruppen und anschließende Alkoxilierung zugänglich sind. Beispiele hierfür sind verzweigte Polyethylenglykole, die durch Kondensation von Glycerinmolekülen und anschließender Ethoxilierung zugänglich sind.

Weiterhin zählen zu den erfindungsgemäß verwendbaren hydrophilen Polymeren mit dendritischer Struktur aber auch alle Polymeren, die durch Polymerisation eines Monomeren mit mindestens einer Hydroxylgruppe und anschließende Alkoxilierung zugänglich sind. Vorzugsweise wird in Gegenwart eines Vernetzer polymerisiert. Dadurch werden Polymerpartikel erhalten, die an ihrer Oberfläche hydrophil sind und eine Vielzahl an Hydroxylgruppen aufweisen. Beispielsweise sind nach Makromol. Chem. 189, 2885 (1988) durch radikalische Polymerisation von p-Hydroxyethylstyrol und anschließende Alkoxilierung sogenannte Stern-Polyethylenglykole erhältlich.

Weitere Beispiele für erfindungsgemäß einsetzbare Polymere sind die hochverzweigten Polymere der Marke

HYBRANE® sowie die Astramol-Dendrimere® (DSM N.V., NL). Hierzu zählen insbesondere hochverzweigte Poly(propylenimine), beispielsweise ausgehend von Butylendiamin durch wiederholte, mehrfache Michael-Addition mit Acrylnitril und Hydrierung erhältlich; Star-Polycaprolactone, Star-Nylon-6, hochverzweigte Polyesteramide, beispielsweise auf Basis des Additionsprodukts Bernsteinsäureanhydrid und Diethanolamin im Molverhältnis 1:1. Im erfindungsgemäßen Verfahren lassen sich auch sogenannten PAMAM-Dendrimere auf Basis Poly(amidoamin), beispielsweise ausgehend von Ammoniak durch wiederholte, mehrfache Umsetzung mit Methylacrylat und Ethylendiamin erhältlich, einsetzen.

Einsetzbar sind Polyglycerole, sternförmige Polyethylenglykole sowie andere hydrophile Verbindungen, bevorzugt aber Polyalkohole, mit kugel- oder haufenförmiger, nicht jedoch linearer Molekulargeometrie.

Bevorzugt sind hydrophile Polymere mit dendritischer Struktur mit einer Glasübergangstemperatur Tg von 20 bis 100°C, besonders bevorzugt von 25 bis 50°C, und/oder einem mittleren Molgewicht von 1000 bis 10000 g/mol, besonders bevorzugt von 2000 bis 6000 g/mol.

Im erfindungsgemäßen Verfahren werden vorzugsweise 0,005 bis 10 Gew.-%, besonders bevorzugt 0,01 bis 5 Gew.-%, ganz besonders bevorzugt 0,05 bis 1 Gew.-%, insbesondere 0,10 bis 0,80 Gew.-%, hydrophiles Polymeres mit dendritischer Struktur bezogen auf das quellbare hydrogelbildende Polymer, eingesetzt.

Die hydrophilen Polymere mit dendritischer Struktur werden vorzugsweise mit dem getrockneten wasserabsorbierenden Hydrogel vermischt. Trocken bedeutet vorzugsweise einen Wassergehalt von weniger als 20 Gew.-%, besonders bevorzugt von weniger als 10 Gew.-%. Das hydrophile Polymer mit dendritischer Struktur kann aber auch vor, während und/oder nach der Oberflächennachvernetzung dem quellbaren hydrogelbildende Polymer zugesetzt werden, vorzugsweise erfolgt die Auftragung aber während der Oberflächennachvemetzung.

Die Art des Mischens unterliegt keinen Beschränkungen, vorzugsweise werden Reaktionsmischer oder Misch- und Trocknungsanlagen, wie beispielsweise Lödige®-Mischer, BEPEX®-Mischer, NAUTA®-Mischer, SCHUGGI®-Mischer, NARA®-Trockner und PROCESSALL®, verwendet. Überdies können auch Wirbelschichttrockner eingesetzt werden. Die Mischung wird zweckmäßigerweise mit einer Verweilzeit von 1 bis 180 Minuten, vorzugsweise von 5 bis 20 Minuten, und einer Drehzahl von 25 bis 375 U/min, vorzugsweise von 100 bis 150 U/min, durchgeführt.

Bei Auftragung zusammen mit der Oberflächennachvernetzungslösung kann der Oberflächennachvernetzer zusammen mit dem dendritischen Polymer in Lösung gebracht werden, wahlweise können aber auch separate Flüssigkeitsströme in den Nachvernetzungsmischer über separate Düsen eingedüst werden. Bei Auftragung staub - oder pulverförmiger Additive ist es weiterhin möglich, dass man das dendritische Polymer in einem Lösemittel löst, in welchem auch das staub- oder pulverförmige Additiv dispergiert werden kann. Optional kann diese Mischung auch den Oberflächennachvernetzer enthalten.

Geeignete Lösemittel sind alle dem Fachmann bekannten Lösemittel, die in der Oberflächennachvernetzung Verwendung finden. Besonders bevorzugt ist Wasser, weiterhin bevorzugt sind Propandiol-1,2, Propandiol-1,3, Butandiol-1,4, Isopropanol, Ethanol, Methanol, Ethylencarbonat, Propylencarbonat, Glycerin sowie Gemische untereinander. Besonders bevorzugt sind Gemische von Wasser mit einem oder mehreren der vorgenannten organischen Lösemittel. Die Wahl des Lösemittels ist jedoch nach den Erfordernissen gerichtet, die zu einer effektiven Herstellung der Lösung führen und nicht auf die vorgenannten eingeschränkt.

Optional kann dem Lösemittel auch ein oder mehrere oberflächenaktive Substanzen oder Dispergierhilfsmittel zugesetzt werden. Es können vorzugsweise nicht-ionische Tenside wie beispielsweise Sorbitanmonolaurat (Span 20), Sorbitanmonododecanat, Sorbitanmonohexadecanat, Sorbitanmonooctadecanat, Sorbitanmonooleat, Sorbitansesquioleat, Sorbitantrioleat welche unter den Handelsnamen Span 40, Span 60, Span 80, Span 83, Span 85 erhältlich sind, zugesetzt werden.

Vorzugsweise wird der Lösung jedoch keine oberflächenaktive Substanz als Dispergierhilfe zugesetzt.

Die Herstellung der Lösung oder Dispersion des dendritischen Polymers, die optional ein oder mehrere dispergierte staub- oder pulverförmige Additive enthalten kann, die optional ein Dispergierhilfsmittel enthalten kann, die weiterhin optional Aluminiumsulfat oder ein lösliches Metallsalz eines anderen 2-, 3- oder 4-valenten Metalls enthalten kann, wie beispielsweise lösliche Salze oder organische Verbindungen des Ca, Mg, Al, Ti, Zr oder La, und die optional mindestens einen Oberflächennachvernetzer enthalten kann, erfolgt bevorzugt durch Aufschmelzen -falls erfoderlich- des dendritischen Polymers und Eingiessen der Schmelze in das Lösemittel oder eines Teils des Lösemittels und anschliessender Verdünnung mit dem anderen Teil. Dabei wird vorzugsweise gut gerührt, bevorzugt turbulent gerührt z.B. mittels eines Ultraturax. Alternativ kann das dendritische Polymer auch direkt im heissen Lösemittel oder eines Teils davon aufgeschmolzen werden. Weiterhin kann man das dendritische Polymer beispielsweise auch mittels Ultraschall oder auch mit geeigneten Düsen dispergieren.

Sollen weiterhin staub- oder pulverförmige Additive eindispergiert werden, empfiehlt sich besonders die Verwendung eines geeigneten kontinuierlichen oder batch-Mischers zur Herstellung der Dispersion. Besonders bevorzugt sind Mischer der Firma IKA-Werke GmbH & Co KG des Typs MHD 2000/4, MHD 2000/5 sowie CMS 2000/4. Ähnlich aufgebaute Mischer, auch anderer Hersteller, können natürlich auch verwendet werden. Weiterhin können Mahlpumpen wie in DE 10131606 beschrieben wie z.B. NEWX 80-50-315, Fa. Wernert-Pumpen GmbH zur Herstellung der Dispersion verwendet werden.

In speziellen Fällen kann die Dispersion auch durch Beschallung mittels Ultraschall im Batch- oder Kontiverfahren hergestellt werden. Weiterhin können die üblichen konventionellen Nassmahlverfahren zur Herstellung der Dispersion verwendet werden. Besonders bevorzugt ist auch die nasschemische feinteilige Ausfällung durch chemische Reaktion zwischen löslichen Komponenten, gegebenenfalls unter Rühren und/oder Tempern, die in der Regel zu besonders feinteiligen Niederschlägen führt.

Ein weiterer Gegenstand der Erfindung sind quellbare hydrogelbildende Polymere, die nach dem erfindungsgemäßen Verfahren erhältlich sind, insbesondere quellbare hydrogelbildende Polymere mit einem Anteil an Partikeln mit einem Durchmesser von weniger als 10 µm von weniger als 100 Gew.-ppm, vorzugsweise von weniger als 50 Gew.-ppm, besonders bevorzugt von weniger als 10 Gew.-ppm, sowie deren Anwendung zur Absorption von Blut und/oder Körperflüssigkeiten, insbesondere von Urin.

Ein weiterer Gegenstand der Erfindung sind quellbare hydrogelbildende Polymere, die nach dem erfindungsgemäßen Verfahren erhältlich sind, insbesondere quellbare hydrogelbildende Polymere mit einem Anteil an Partikeln mit einem Durchmesser von weniger als 10 µm von weniger als 100 Gew.-ppm, vorzugsweise von weniger als 50 Gew.-ppm, besonders bevorzugt von weniger als 10 Gew.-ppm, wobei das quellbare hydrogelbildende Polymer mindestens ein pulverförmiges und/oder staubförmiges Additiv, wie beispielsweise Metallsalze, wie Aluminiumsulfat und/oder Magnesiumsulfat, pyrogene Kieselsäuren, wie Aerosil® 200, Polysaccharide und deren Derivate, nichtionische Tenside, Wachse, Diatomeenerde und/oder Mikrohohlkugeln, insbesondere wasserunlösliche Phosphate, wie Kalziumphosphat, enthält, sowie deren Anwendung zur Absorption von Blut und/oder Körperflüssigkeiten, insbesondere von Urin.

Wasserunlöslich bedeutet eine Löslichkeit von weniger als 1 g, vorzugsweise von weniger als 0,1 g, besonders bevorzugt von weniger als 0,01 g, in 100 ml Wasser bei 25°C.

Mikrohohlkugeln werden in Chem. Ing. Techn. 75, 669 (2003) beschrieben. Mikrohohlkugeln sind gasgefüllte oder evakuierte globuläre Feststoffpartikel mit Durchmessern von 1 bis 1000 µm. Die typischen Wanddicken der Mikrohohlkugeln betragen zwischen 1 und 10 % des Durchmessers. Die Wandmaterialien unterliegen keiner Beschränkung. Mögliche Wandmaterialien sind Glas, keramikbildende Oxide oder Mischoxide, Silikate, Alumosilikate, Polymere, Polykondensate und Metalle.

Die erfindungsgemäßen quellbaren hydrogelbildenden Polymere haben typischerweise eine Flüssigkeitsweiterleitung (SFC) von mindestens 40 x $10^{-7}$ $cm^3s/g$, vorzugsweise mindestens 60 x $10^{-7}$ $cm^3s/g$, besonders bevorzugt mindestens 80 x $10^{-7}cm^3s/g$, und noch mehr bevorzugt mindestens 120 x $10^{-7}$ $cm^3s/g$, und am meisten bevorzugt mindestens 130 x $10^{-7}$ $cm^3s/g$.

Die erfindungsgemäßen quellbaren hydrogelbildenden Polymere haben typischerweise eine Zentrifugenretentionskapazität (CRC) von mindestens 24 g/g, vorzugsweise mindestens 25 g/g, besonders bevorzugt mindestens 26 g/g, und noch mehr bevorzugt mindestens 28 g/g, und am meisten bevorzugt mindestens 30 g/g.

Die erfindungsgemäßen quellbaren hydrogelbildenden Polymere haben typischerweise eine Absorption unter Druck (AUL) von mindestens 20 g/g, vorzugsweise mindestens 22 g/g, besonders bevorzugt mindestens 23 g/g, und noch mehr bevorzugt mindestens 25 g/g, und am meisten bevorzugt mindestens 28 g/g.

Pulverförmige Additive haben vorzugsweise eine mittlere Teilchengröße von weniger als 2000 µm, besonders bevorzugt von weniger als 400 µm.

Staubförmige Additive haben eine mittlere Teilchengröße von weniger als 200 µm, vorzugsweise von weniger als 50 µm, besonders bevorzugt von weniger als 10 µm.

Ein weiterer Gegenstand der Erfindung sind Hygieneartikel, welche erfindungsgemäß hergestellte Superabsorber enthalten.

Die im erfindungsgemäßen Verfahren einsetzbaren quellbaren hydrogelbildenden Pölymere sind insbesondere Polymere aus vernetzten (co)polymerisierten hydrophilen Monomeren, Polyasparaginsäure, Pfropf(co)polymere von einem oder mehreren hydrophilen Monomeren auf eine geeignete Pfropfgrundlage, vernetzte Cellulose- oder Stärkeether oder in wässrigen Flüssigkeiten quellbare Naturprodukte, wie beispielsweise Guarderivate. Bevorzugt handelt es sich bei dem zu vernetzenden Polymer um ein Polymer, das Struktureinheiten enthält, die sich von Acrylsäure oder deren Estern ableiten, oder die durch Pfropfcopolymerisation von Acrylsäure oder Acrylsäureestern auf eine wasserlösliche Polymermatrix erhalten wurden. Diese Hydrogele sind dem Fachmann bekannt und beispielsweise in der US 4,286,082, DE-C-27 06 135, US 4,340,706, DE-C-37 13 601, DE-C-28 40 010, DE-A-43 44 548, DE-A-40 20 780, DE-A-40 15 085, DE-A-39 17 846, DE-A-38 07 289, DE-A-35 33 337, DE-A-35 03 458, DE-A-42 44 548, DE-A-42 19 607, DE-A-40 21 847, DE-A-38 31 261, DE-A-35 11 086, DE-A-31 18 172, DE-A-30 28 043, DE-A-44 18 881, EP-A-0 801 483, EP-A-0 455 985, EP-A-0 467 073, EP-A-0 312 952, EP-A-0 205 874, EP-A-0 499 774, DE-A 26 12 846, DE-A-40 20 780, EP-A-0 205 674, US 5,145,906, EP-A-0 530 438, EP-A-0 670 073, US 4,057,521, US 4,062,817, US 4,525,527, US 4,295,987, US 5,011,892, US 4,076,663 oder US 4,931,497 beschrieben. Der Inhalt der vorstehend genannten Patentdokumente ist betreffend Art und Herstellung solcher Hydrogele ausdrücklich Bestandteil der vorliegenden Offenbarung.

Zur Herstellung dieser quellbaren hydrogelbildenden Polymere geeignete hydrophile Monomere sind beispielsweise polymerisationsfähige Säuren, wie Acrylsäure, Methacrylsäure, Vinylsulfonsäure, Vinylphosphonsäure, Maleinsäure einschließlich deren Anhydrid, Fumarsäure, Itaconsäure, 2-Acrylamido-2-methylpropansulfonsäure, 2-Acrylamido-2-methylpropanphosphonsäure sowie deren Amide, Hydroxyalkylester und aminogruppen- oder ammoniumgruppenhaltige Ester und Amide sowie die Alkalimetall- und/oder Ammoniumsalze der Säuregruppen enthaltenden Monomeren. Des weiteren eignen sich wasserlösliche N-Vinylamide wie N-Vinylformamid oder auch Diallyldimethyl-ammoniumchlorid. Bevorzugte hydrophile Monomere sind Verbindungen der allgemeinen Formel I

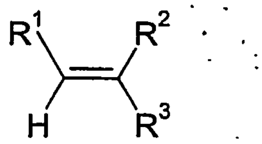

(I)

worin

$R^1$ Wasserstoff, $C_1$-$C_4$-Alkyl, wie beispielsweise Methyl oder Ethyl, oder Carboxyl,

$R^2$ -$COOR^4$, Hydroxysulfonyl oder Phosphonyl, eihe mit einem $C_1$-$C_4$-Alkanol veresterte Phosphonylgruppe oder eine Gruppe der Formel II

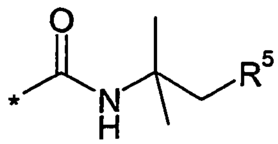

(II)

$R^3$ Wasserstoff, $C_1$-$C_4$-Alkyl, wie beispielsweise Methyl oder Ethyl,

$R^4$ Wasserstoff, $C_1$-$C_4$-Aminoalkyl, $C_1$-$C_4$-Hydroxyalkyl, Alkalimetall- oder Ammoniumion und

$R^5$ eine Sulfonylgruppe, eine Phosphonylgruppe oder eine Carboxylgruppe oder jeweils deren Alkalimetall- oder Ammoniumsalze, bedeuten.

Beispiele für $C_1$-$C_4$-Alkanole sind Methanol, Ethanol, n-Propanol, Isopropanol oder n-Butanol.

Besonders bevorzugte hydrophile Monomere sind Acrylsäure und Methacrylsäure, sowie deren Alkalimetall- oder Ammoniumsalze, beispielsweise Natriumacrylat, Kaliumacrylat oder Ammoniumacrylat.

Geeignete Pfropfgrundlagen für hydrophile Hydrogele, die durch Pfropfcopolymerisation olefinisch ungesättigter Säuren oder ihrer Alkalimetall- oder Ammoniumsalze erhältlich sind, können natürlichen oder synthetischen Ursprungs sein. Beispiele sind Stärke, Cellulose oder Cellulosederivate sowie andere Polysaccharide und Oligosaccharide, Polyalkylenoxide, insbesondere Polyethylenoxide und Polypropylenoxide, sowie hydrophile Polyester.

Geeignete Polyalkylenoxide haben beispielsweise die Formel III

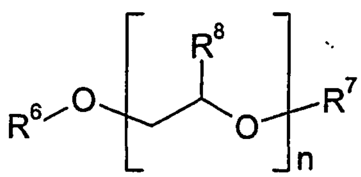

(III)

worin

$R^6$, $R^7$ unabhängig voneinander Wasserstoff, $C_1$-$C_{12}$-Alkyl, wie beispielsweise Methyl Ethyl, n-Propyl oder Isopropyl, $C_2$-$C_{12}$-Alkenyl, wie beispielsweise Ethenyl, n-Propenyl oder Isopropenyl, $C_7$-$C_{20}$-Aralkyl, wie beispielsweise Phenylmethyl, 1-Phenylethyl oder 2-Phenylethyl, oder Aryl, wie beispielsweise 2-Methylphenyl, 4-Methylphenyl oder 4-Ethylphenyl,

$R^8$ Wasserstoff oder Methyl und

n eine ganze Zahl von 1 bis 10000 bedeuten.

$R^6$ und $R^7$ bedeuten bevorzugt Wasserstoff, $C_1$-$C_4$-Alkyl, $C_2$-$C_6$-Alkenyl oder Phenyl.

Bevorzugte Hydrogele sind insbesondere Polyacrylate, Polymethacrylate sowie die in der US 4,931,497, US 5,011,892 und US 5,041,496 beschriebene Pfropfpolymere.

Die quellbaren hydrogelbildenden Polymere sind bevorzugt vernetzt, d.h. sie enthalten Verbindungen mit mindestens zwei Doppelbindungen, die in das Polymemetzwerk einpolymerisiert sind. Geeignete Vernetzer sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A-0 343 427 beschrieben sind. Weiterhin einsetzbar im erfindungsgemäßen Verfahren sind auch Hydrogele, die unter Verwendung von Polyallylethern als Vernetzer und durch saure Homopolymerisation von Acrylsäure hergestellt werden. Geeignete Vernetzer sind Pentaerythritoltri- und -tetraallylether, Polyethylenglykoldiallylether, Ethylenglykoldiallylether, Glyceroldi- und Triallylether, Polyallylether auf Basis Sorbitol, sowie ethoxilierte Varianten davon.

Die bevorzugten Herstellverfahren für das im erfindungsgemäßen Verfahren einsetzbare Basispolymer werden in "Modern Superabsorbent Polymer Technology", F.L. Buchholz and A.T. Graham, Wiley-VCH, 1998, Seiten 77 bis 84 beschrieben. Besonders bevorzugt sind Basispolymere, die im Kneter, wie beispielsweise in WO-A-01/38402 beschrieben, oder auf einem Bandreaktor, wie beispielsweise in EP-A-0 955 086 beschrieben, hergestellt werden.

Das wasserabsorbierende Polymer ist bevorzugt eine polymere Acrylsäure oder ein Polyacrylat. Die Herstellung dieses wasserabsorbierenden Polymeren kann nach einem aus der Literatur bekannten Verfahren erfolgen. Bevorzugt sind Polymere, die vernetzende Comonomere in Mengen von 0,001 bis 10 mol-%, vorzugsweise 0,01 bis 1 mol-% enthalten, ganz besonders bevorzugt sind jedoch Polymere, die durch radikalische Polymerisation erhalten wurden und bei denen ein mehrfunktioneller ethylenisch ungesättigter Radikalvernetzer verwendet wurde, der zusätzlich noch mindestens eine freie Hydroxylgruppe trägt (wie beispielsweise Pentaerythritoltriallylether oder Trimethylolpropandiallylether).

Die quellbaren hydrogelbildenden Polymere können durch an sich bekannte Polymerisationsverfahren hergestellt werden. Bevorzugt ist die Polymerisation in wässriger Lösung nach dem Verfahren der sogenannten Gelpolymerisation. Dabei werden beispielsweise 15 bis 50 gew.-%ige wässrige Lösungen eines oder mehrerer hydrophiler Monomere und gegebenenfalls einer geeigneten Pfropfgrundlage in Gegenwart eines Radikalinitiators, bevorzugt ohne mechanische Durchmischung unter Ausnutzung des Trommsdorff-Norrish-Effektes (Makromol. Chem. 1, 169 (1947)), polymerisiert. Die Polymerisationsreaktion kann im Temperaturbereich zwischen 0 und 150°C, vorzugsweise zwischen 10 und 100°C, sowohl bei Normaldruck als auch unter erhöhtem oder erniedrigtem Druck durchgeführt werden. Wie üblich kann die Polymerisation auch in einer Schutzgasatmosphäre, vorzugsweise unter Stickstoff, ausgeführt werden. zur Auslösung der Polymerisation können energiereiche elektromagnetische Strahlen oder die üblichen chemischen Polymerisationsinitiatoren herangezogen werden, beispielsweise organische Peroxide, wie Benzoylperoxid, tert.-Butylhydroperoxid, Methylethylketonperoxid, Cumolhydroperoxid, Azoverbindungen wie Azodiisobutyronitril sowie anorganische Peroxoverbindungen wie $(NH_4)_2S_2O_8$ oder $K_2S_2O_8$ oder $H_2O_2$. Sie können gegebenenfalls in Kombination mit Reduktionsmitteln wie Natriumhydrogensulfit und Eisen(II)-sulfat oder Redoxsystemen, welche als reduzierende Komponente eine aliphatische und aromatische Sulfinsäure, wie Benzolsulfinsäure und Toluolsulfinsäure oder Derivate dieser Säuren enthalten, wie Mannichaddukte aus Sulfinsäuren, Aldehyden und Aminoverbindungen, wie sie in der DE-A-13 01 566 beschrieben sind, verwendet werden. Durch mehrstündiges Nachheizen der Polymergele im Temperaturbereich 50 bis 130°C, vorzugsweise 70 bis 100°C, können die Qualitätseigenschaften der Polymere noch verbessert werden.

Die erhaltenen Gele werden beispielsweise zu 0 bis 100 mol-%, bevorzugt 25 und 90 mol-%, insbesondere zwischen 50 und 85 mol-%, bezogen auf eingesetztes Monomer neutralisiert, wobei die üblichen Neutralisationsmittel verwendet werden können, bevorzugt Alkalimetallhydroxide oder -oxide, besonders bevorzugt jedoch Natriumhydroxid, Natriumcarbonat und Natriumhydrogencarbonat.

Üblicherweise wird die Neutralisation durch Einmischung des Neutralisationsmittels als wässrige Lösung oder bevorzugt auch als Feststoff erreicht. Das Gel wird hierzu mechanisch zerkleinert, beispielsweise mittels eines Fleischwolfes und das Neutralisationsmittel wird aufgesprüht, übergestreut oder aufgegossen, und dann sorgfältig untergemischt. Dazu kann die erhaltene Gelmasse noch mehrmals zur Homogenisierung gewolft werden. Die neutralisierte Gelmasse wird dann mit einem Band- oder Walzentrockner getrocknet bis der Restfeuchtegehalt vorzugsweise unter 10 Gew.-%, insbesondere unter 5 Gew.-% liegt. Das getrocknete Hydrogel wird hiernach gemahlen und gesiebt, wobei zur Mahlung üblicherweise Walzenstühle, Stiftmühlen oder Schwingmühlen eingesetzt werden können. Die Partikelgröße des gesiebten Hydrogels liegt vorzugsweise im Bereich 45 bis 1000 $\mu$m, besonders bevorzugt bei 45 bis 850 $\mu$m, ganz besonders bevorzugt bei 100 bis 800 $\mu$m und noch mehr bevorzugt bei 100 bis 700 $\mu$m.

Wenn mehr als 80 Gew.% der Partikel Korngrössen von 45 bis 850 μm oder 100 bis 850 μm oder 100 bis 800 μm oder 150 bis 800 μm oder 200 bis 850 μm oder 250 bis 850 μm oder 300 bis 850 μm aufweisen, dann beträgt der Anteil an Partikeln größer 850 μm bevorzugt nicht mehr als 1 Gew.-%, besonders bevorzugt nicht mehr als 0,5 Gew.-%.

Weitere bevorzugte Korngrössen liegen im Bereich 100 bis 500 μm, 150 bis 500 μm, 100 bis 600 μm, 300 bis 600 μm, kleiner als 600 μm, kleiner als 400 μm, besonders bevorzugt kleiner als 300 μm, In diesen Bereichen liegen mindestens 80%, bevorzugt mindestens 90% aller Partikel. Der Anteil an Partikeln kleiner 100 μm beträgt bevorzugt weniger als 3 Gew.-%, besonders bevorzugt weniger als 1 Gew.-%.

Wenn 80 bis 95 Gew.-% der Partikel Korngrössen von 150 bis 500 μm oder 100 bis 500 μm aufweisen, so beträgt vorzugsweise der Anteil der Partikel größer 500 μm nur maximal 10 Gew.-% und der Anteil größer 600 μm weniger als 1 Gew.-%.

Wenn 80 bis 95 Gew.-% der Partikel Korngrössen von 150 bis 600 μm oder 100 bis 600 aufweisen, so beträgt vorzugsweise der Anteil der Partikel größer 600 μm nur maximal 10 Gew.-% und beträgt bevorzugt maximal 5 Gew.-% und beträgt am meisten bevorzugt weniger als 1 Gew.-%.

Die Nachvernetzung von quellbaren hydrogelbildenden Polymeren wird in der Regel so durchgeführt, dass eine Lösung des Oberflächennacfiüernetzers auf das trockene Grundpolymerpulver aufgesprüht wird. Im Anschluss an das Aufsprühen wird das Polymerpulver thermisch getrocknet, wobei die Vernetzungsreaktion sowohl vor als auch während der Trocknung stattfinden kann.

Bevorzugt ist das Aufsprühen einer Lösung des Vernetzers in Reaktionsmischern oder Misch- und Trocknungsanlagen, wie beispielsweise Lödige®-Mischer, BEPEX®-Mischer, NAUTA®-Mischer, SCHUGGI®-Mischer, NARA®-Trockner und PROCESSALL®. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Es kann aber auch beispielsweise eine azeotrope Destillation als Trocknungsverfahren benutzt werden.

Bevorzugte Trocknungstemperaturen liegen im Bereich 50 bis 250°C, bevorzugt bei 60 bis 200°C, und besonders bevorzugt bei 70 bis 180°C. Die bevorzugte Verweilzeit bei dieser Temperatur im Reaktionsmischer oder Trockner beträgt unter 60, bevorzugt unter 30 Minuten, besonders bevorzugt unter 10 Minuten.

Die Oberflächennachvernetzer können allein oder in Kombination mit anderen Oberflächennachvernetzern verwendet werden, beispielsweise Ethylenglykoldiglycidylether, Diethylenglykoldiglycidylether, Polyethylenglykoldiglycidylether, Propylenglykoldiglycidylether, Dipropylenglykoldiglycidylether, Polypropylenglykoldiglycidylether, Glycerindiglycidylether, Polyglycerindiglycidylether, Epichlorhydrin, Etylendiamin, Ethylenglykol, Diethylenglykol, Triethylenglykol, Polyethylenglykol, Propylenglykol, Dipropylenglykol, Tripropylenglykol, Polypropylenglykol, Butylenglykol, 1,3-Propandiol, 1,4-Butandiol, Bisphenol A, Glycerin, Trimethylolpropan, Pentaerythrit, Sorbitol, Diethanolamin, Triethanolamin, Etylendiamin, Ethylencarbonat, Propylencarbonat, 2-Oxazolidone, wie 2-Oxazolidinon oder N-Hydroxyethyl-2-oxazolidinon, Morpholin-2,3-dione, wie N-2-Hydroxyethyl-morpholin-2,3-dion, N-Methyl-morpholin-2,3-dion , N-Ethyl-morpholin-2,3-dion und/oder N-tert.-Butyl-morpholin-2,3-dion, 2-Oxotetrahydro-1,3-oxazin, N-Acyl-2-oxazolidone, wie N-Acetyl-2-oxazolidon, bicyclische Amidacetale, wie 5-Methyl-1-aza-4,6-dioxa-bicyclo[3.3.0]octan, 1-Aza-4,6-dioxa-bicyclo[3.3.0]octan und/oder 5-Isopropyl-1-aza-4,6-dioxa-bicyclo[3.3.0]octan, und/oder Bis- und Poly-2-oxazolidinone.

Der Oberflächennachvernetzer wird bevorzugt in nicht selbst-reaktiven Lösemitteln gelöst, bevorzugt in niederen Alkoholen, wie beispielsweise Methanol, Ethanol, Isopropanol, Propylenglykol, Ethylenglykol, vorzugsweise Isopropanol, ganz besonders bevorzugt in wässrigen Lösungen solcher geeigneter Alkohole, wobei der Alkoholgehalt der Lösung 10 bis 90 Gew.-%, besonders bevorzugt zwischen 25 bis 70 Gew.-%, insbesondere zwischen 30 bis 50 Gew.-% beträgt.

Der Oberflächennachvernetzer wird dabei in einer Menge von 0,01 bis 1 Gew.-%, bezogen auf das eingesetzte Polymer, verwendet, und die Vernetzerlösung selbst in einer Menge von 1 bis 20 Gew.-%, bevorzugt 3 bis 15 Gew.-%, bezogen auf das eingesetzte Polymer, verwendet.

Die erfindungsgemäßen quellbaren hydrogelbildenden Polymere eignen sich zur Absorption von Blut und/oder Körperflüssigkeiten in Hygieneartikeln, wie beispielsweise Inkontinenzartikel, Binden, Tampons, Einlagen. Dazu können die erfindungsgemäßen quellbaren hydrogelbildenden Polymere mit Fasern, wie beispielsweise Zellulose, sowie Faservlies zu absorbierenden Verbundstoffen verarbeitet werden.

Die im erfindungsgemäßen Verfahren eingesetzten dendritischen Polymere sind aufgrund ihrer nichtlinearen Struktur zwar hydrophil, jedoch ist wegen der speziellen Geometrie die unerwünschte Fähigkeit zur thermischen Nachvernetzung stark eingeschränkt, so dass die dendritischen Polymere während der Oberflächennachvemetzung zugesetzt werden können. Ein zusätzlicher Einmischschritt ist nicht erforderlich. Besonders vorteilhaft ist dabei die globuläre Form hinsichtlich der Viskosität der wässrigen Lösung in angequollenen bzw. gequollenen Superabsorber. Dies hat zur Folge, dass die Flüssigkeitsweiterleitung unverändert hoch bleibt, auch bei hohem Polymereinsatz.

Das Staubbindevermögen des dendritischen Polymeren ist hervorragend, insbesondere das Bindevermögen staubförmiger bzw. pulverförmiger Additive. Sowohl direkt nach dem Auftrag als auch nach harter mechanischer Beanspruchung ist praktisch kaum Abrieb im Produkt nachweisbar.

Die Fördereigenschaften des Endprodukts werden auch durch das bei der Oberflächennachvernetzung verwendete Lösungsmittel beeinflusst. Dabei hat Propylenglykol/Wasser gegenüber Isopropanol/Wasser deutliche Vorteile. Andererseits lässt sich nicht umgesetztes Propylenglykol im Gegensatz zu nicht umgesetzten Isopropanol nur schlecht entfernen und verbleibt im Endprodukt. Der Alkoholgehalt im getrockneten Endprodukt beträgt typischerweise bei der Verwendung von Propylenglykol von 5000 bis 15000 Gew.-ppm und bei der bevorzugten Verwendung von Isopropanol weniger als 1000 Gew.-ppm, vorzugsweise weniger als 500 Gew.-ppm, besonders bevorzugt weniger als 100 Gew.-ppm.

Der Zusatz dendritischer Polymere im erfindungsgemäßen Verfahren ermöglicht die Verwendung von Isopropanol/Wasser (30 Gew.-% Isopropanol in Wasser) als Lösungsmittel bei der Oberflächennachvernetzung um Superabsorber mit Fördereigenschaften zu erhalten, die bislang nur bei Verwendung von Propylenglykol/Wasser (30 Gew.-% Propylenglykol in Wasser) zugänglich waren.

Zur Bestimmung der Güte der erfindungsgemäßen Nachbehandlung wird das getrocknete Hydrogel mit den Testmethoden geprüft, die nachfolgend beschrieben sind:

Methoden:

Die Messungen sollten, wenn nicht anders angegeben, bei einer Umgebungstemperatur von 23 ± 2°C und einer relativen Luftfeuchte von 50 ± 10 % durchgeführt werden. Das Quellbare hydrogelbildende Polymer wird vor der Messung gut durchmischt.

<u>Zentrifuaenretentionskapazität (CRC Centrifuge·Retention Capacity)</u>

Bei dieser Methode wird die freie Quellbarkeit des Hydrogels im Teebeutel bestimmt. Zur Bestimmung der CRC werden 0,2000 ± 0,0050 g getrocknetes Hydrogel (Kornfraktion 106 - 850 μm) in einem 60 x 85 mm großen Teebeutel eingewogen, der anschließend verschweißt wird. Der Teebeutel wird für 30-Minuten in einen Überschuss von 0,9 gew.-%iger Kochsalzlösung gegeben (mindestens 0,83 l Kochsalzlösung/1 g Polymerpulver). Anschließend wird der Teebeutel 3 Minuten lang bei 250 G zentrifugiert. Die Bestimmung der vom Hydrogel festgehaltenen Flüssigkeitsmenge geschieht durch Auswägen des zentrifugierten Teebeutels.

Die Zentrifugenretentionskapazität kann auch nach der von der EDANA (<u>E</u>uropean <u>D</u>isposables <u>a</u>nd <u>N</u>onwovens <u>A</u>ssociation) empfohlenen Testmethode Nr. 441.2-02 "Centrifuge retention capacity" bestimmt werden.

<u>Absorption unter Druck (AUL Absorbency Under Load) 0.7 psi (4830 Pa)</u>

Die Messzelle zur Bestimmung der AUL 0,7 psi ist ein Plexiglas-Zylinder mit einem Innendurchmesser von 60 mm und einer Höhe von 50 mm, der an der Unterseite einen angeklebten Edelstahl-Siebboden mit einer Maschenweite von 36 μm besitzt. Zu der Messzelle gehört weiterhin eine Plastikplatte mit einem Durchmesser von 59 mm und ein Gewicht, welches zusammen mit der Plastikplatte in die Messzelle hineingestellt werden kann. Das Gewicht der Plastikplatte und das Gewicht betragen zusammen 1344 g. Zur Durchführung der Bestimmung der AUL 0,7 psi wird das Gewicht des leeren Plexiglas-Zylinders und der Plastikplatte ermittelt und als Wo notiert. Dann werden 0,900 ± 0,005 g quellbares hydrogelbildendes Polymer (Korngrößenverteilung 150 - 800 μm) in den Plexiglas-Zylinder eingewogen und möglichst gleichmäßig auf dem Edelstahl-Siebboden verteilt. Anschließend wird die Plastikplatte vorsichtig in den Plexiglas-Zylinder hineingelegt und die gesamte Einheit gewogen; das Gewicht wird als $W_a$ notiert. Nun wird das Gewicht auf die Plastikplatte in dem Plexiglas-Zylinder gestellt. In die Mitte der Petrischale mit einem Durchmesser von 200 mm und einer Höhe von 30 mm wird eine keramische Filterplatte mit einem Durchmesser von 120 mm und einer Höhe von 10 mm (Duran, Fa. Schott) und einer Porosität 0 gelegt und soviel 0,9 gew.-%ige Natriumchloridlösung eingefüllt, dass die-Flüssigkeitsoberfläche mit der Filterplattenoberfläche abschließt, ohne dass die Oberfläche der Filterplatte benetzt wird. Anschließend wird ein rundes Filterpapier mit einem Durchmesser von 90 mm und einer Porengröße < 20 μm (S&S 589 Schwarzband von Schleicher & Schüll) auf die keramische Platte gelegt. Der quellbares hydrogelbildendes Polymer enthaltende Plexiglas-Zylinder wird mit Plastikplatte und Gewicht nun auf das Filterpapier gestellt und dort für 60 Minuten belassen. Nach dieser Zeit wird die komplette Einheit aus der Petrischale vom Filterpapier herausgenommen und anschließend das Gewicht aus dem Plexiglas-Zylinder entfernt. Der gequollenes Hydrogel enthaltende Plexiglas-Zylinder wird zusammen mit der Plastikplatte ausgewogen und das Gewicht als $W_b$ notiert.

Die Absorption unter Druck (AUL) wird wie folgt- berechnet:

$$\text{AUL 0,7 psi [g/g]} = [W_b - W_a]/[W_a - W_0]$$

Die Absorption unter Druck kann auch nach der von der EDANA (European Disposables and Nonwovens Association) empfohlenen Testmethode Nr. 442.2-02 "Absorption under pressure" bestimmt werden.

Flüssigkeitsweiterleitung (SFC Saline Flow Conductivity)

Die Flüssigkeitsweiterleitung einer gequollenen Gelschicht unter Druckbelastung von 0,3 psi (2070 Pa) wird, wie in EP-A-0 640 330 beschrieben, als Gel-Layer-Permeability einer gequollenen Gelschicht aus superabsorbierendem Polymer bestimmt, wobei die in zuvor genannter Patentanmeldung auf Seite 19 und in Figur 8 beschriebene Apparatur dahingehend modifiziert wurde, dass die Glasfritte (40) nicht mehr verwendet wird, der Stempel (39) aus gleichem Kunststoffmaterial besteht wie der Zylinder (37) und jetzt über die gesamte Auflagefläche gleichmäßig Verteilt 21 gleichgroße Bohrungen enthält. Die Vorgehensweise sowie Auswertung der Messung bleibt unverändert gegenüber EP-A-0 640 330. Der Durchfluss wird automatisch erfasst.

Die Flüssigkeitsweiterleitung (SFC) wird wie folgt berechnet:

$$SFC\ [cm^3s/g] = (F_g(t=0)xL_0)/(dxAxWP),$$

wobei $F_g(t=0)$ der Durchfluss an NaCl-Lösung in g/s ist, der anhand einer linearen Regressionsanalyse der Daten Fg(t) der Durchflussbestimmungen durch Extrapolation gegen t=0 erhalten wird, $L_0$ die Dicke der Gelschicht in cm, d die Dichte der NaCl-Lösung in g/cm$^3$, A die Fläche der Gelschicht in cm$^2$ und WP der hydrostatische Druck über der Gelschicht in dyn/cm$^2$ darstellt.

Fließgeschwindigkeit (FLR Flow Rate)

Bei der Methode wird die Geschwindigkeit ermittelt, mit der das quellbare hydrogelbildende Polymer durch einen Trichter fließt. Zur Bestimmung der FLR werden 100 $\pm$ 0,01 getrocknetes Hydrogel in einen verschließbaren Metalltrichter eingewogen. Das Gewicht des quellbaren hydrogelbildenden Polymeren wird als $W_1$ notiert. Der Trichter entspricht DIN 53492. Das Auslaufrohr des Trichters hat eine Höhe von 145,0 $\pm$ 0,5 mm und einen Innendurchmesser von 10,00 $\pm$ 0,01 mm. Der Neigungswinkel der Trichterwand gegenüber der Horizontalen beträgt 20°. Der Metalltrichter wird geerdet. Anschließend wird der Trichter geöffnet und die Zeit gemessen bis der Trichter entleert ist. Die Zeit wird als t notiert.

Die Messung wird doppelt durchgeführt. Die Abweichung beider Messwerte darf maximal 5 % betragen.

Die Fließgeschwindigkeit (FLR) wird wie folgt berechnet:

$$FLR\ [g/s] = W_1/t$$

Die Fließgeschwindigkeit kann auch nach der von der EDANA (European Disposables and Nonwovens Association) empfohlenen Testmethode Nr. 450.2-02 "Flowrate" bestimmt werden.

Ausschüttqewicht (ASG)

Bei der Methode wird die Dichte des quellbaren hydrogelbildenden Polymeren nach dem Ausschütten ermittelt. Die Messung wird mit einem zylindrischen Pygnometer entsprechend DIN 53466 durchgeführt. Das Pygnometer hat ein Volumen (V) von 100,0 $\pm$ 0,5 ml, einen Innendurchmesser von 45,0 $\pm$ 0,1 mm und eine Höhe von 63,1 $\pm$ 0,1 mm. Das Pygnometer wird leer gewogen. Das Gewicht wird als $W_1$ notiert. Zur Bestimmung des ASG werden ca. 100 g getrocknetes Hydrogel in einen verschließbaren Metalltrichter eingewogen. Der Trichter entspricht DIN 53.492. Das Auslaufrohr des Trichters hat eine Höhe von 145,0 $\pm$ 0,5 mm und einen Innendurchmesser von 10,00 $\pm$ 0,01 mm. Der Neigungswinkel der Trichterwand gegenüber der Horizontalen beträgt 20°. Der Metalltrichter und das Pygnometer werden geerdet. Anschließend wird der Trichter in das Pynometer entleert, wobei überschüssiges quellbares hydrogelbildendes Polymer überläuft. Das überstehende quellbare hydrogelbildende Polymer wird mittels eines Spatels abgestrichen. Das gefüllte Pygnometer wird gewogen und das Gewicht als $W_2$ notiert.

Die Messung wird doppelt durchgeführt. Die Abweichung beider Messwerte darf maximal 5 % betragen.

Das Ausschüttgewicht (ASG) wird wie folgt berechnet:

$$ASG\ [g/ml] = [W_2 - W_1]/V$$

Das Ausschüttgewicht kann auch nach der von der EDANA (European Disposables and Nonwovens Association) empfohlenen Testmethode Nr. 460.2-02 "Density" bestimmt werden.

Bruchtest (Fragility test)

Mit dem Bruchtest wird das Verhalten des quellbaren hydrogelbildenden Polymeren bei mechanischer Belastung ermittelt. Der Test wird mit einem verschließbaren Steinzeugbecher durchgeführt. Der Steinzeugbecher hat einen Durchmesser von 85,7 mm (3 3/8 inch), eine Höhe von 111,1 mm (4 3/8 inch) und ein Volumen von 379 $cm^3$ (0,1 gaslons). Die Öffnung hat einen Durchmesser von 31,8 mm (1 1/4 inch). Die Höhe mit Deckel beträgt 139,7 mm (5 1/2 inch). In den Steinzeugbecher werden 50 g quellbares hydrogelbildendes Polymer und 127 g zylindrische Steinzeugmahlkörper eingefüllt. Die Steinzeugmahlkörper haben einen Durchmesser von 12,7 mm (1/2 inch), eine Höhe von 12,7 mm (1/2 inch) und ein Einzelgewicht von ca. 5,3 g. Der Steinzeugbecher wird verschlossen und 15 Minuten auf einer Rollmühle mit Walzenstuhl (beispielsweise von der Fa. U.S. Stoneware, US) mit 180 U/min gedreht.

Staubanteile (Dust)

Die Staubanteile können nach der von der EDANA (European Disposables and Nonwovens Association) empfohlenen Testmethode Nr. 490.2-02 "Dust" bestimmt werden.

Verbackungstest (Anti-Caking)

In ein 100 ml Becherglas werden 30 g quellbares hydrogelbildendes Polymer eingewogen. Anschließend wird das Becherglas 2 Stunden bei 40°C und einer relativen Luftfeuchtigkeit von 95% gelagert. Nach der Lagerung wird das quellbare hydrogelbildende Polymer ausgeschüttet. Das Ausschüttverhalten wird qualitativ bewertet, dabei bedeutet "sehr schlecht", dass sich auf der Oberfläche des quellbare hydrogelbildenden Polymers eine stabile Haut gebildet und das quellbare hydrogelbildende Polymer im Becherglas bleibt, "sehr gut" bedeutet, dass sich das quellbare hydrogelbildende Polymer vollständig ausschütten lässt, und die Werte dazwischen bedeuten, dass an der Becherglaswand ein Rand aus quellbarem hydrogelbildendem Polymer verbleibt.

Korngrößenverteilung

Die Korngrößenverteilung kann nach der von der EDANA (European Disposables and Nonwovens Association) empfohlenen Testmethode Nr. 420.2-02 "Particle Size Distribution - Sieve Fractionation" bestimmt werden. Es wird lediglich zusätzlich ein 500 µm Sieb benötigt.

Alternativ kann eine photographische Methode verwendet werden, die zuvor gegen einen Siebstandard kalibriert wurde.

Extrahierbare 16h

Der Gehalt an extrahierbaren Bestandteilen des hydrogelbildenden Polymeren kann nach der von der EDANA (European Disposables and Nonwovens Association) empfohlenen Testmethode Nr. 470.2-02 "Determination of extractable polymer content by potentiometric titration" bestimmt werden.

pH-Wert

Der pH-Wert des des hydrogelbildenden Polymeren kann nach der von der EDANA (European Disposables and Nonwovens Association) empfohlenen Testmethode Nr. 400.2-02 "Determination of pH" bestimmt werden.

Beispiele

Beispiele 1 bis 4:

In einem Lödige Labormischer wurde Grundpolymer ASAP 500 Z durch Aufsprühen von 3,16 Gew.-% Isopropanol/Wasser (30:70) und 0,085 Gew.-% 2-Oxazolidinon, jeweils bezogen auf das Grundpolymer, und anschließendem

Aufheizen auf 175°C für 120 Minuten nachvernetzt. Dabei wurden ggf. dendritische Polymere und/oder Kalziumtriphosphat als Additiv hinzugefügt. Anschließend wurde das erhaltene Polymer bei 850 μm abgesiebt und von Klumpen befreit. Die Produkte wurden getestet und auf Abrieb bzw. Staubanteile (<10 μm) mittels Laser-Fallrohrmethode analysiert. Dieselben Produkte wurden mittels einer Rollmühle mechanisch degradiert und nochmals auf den Abriebgehalt geprüft.

Die Ergebnisse der Beispiele 1 bis 4 sind in Tabelle 1 zusammengestellt.

Beispiel 5:

Ein Grundpolymer wurde gemäß dem in der WO 01/38402 beschriebenen kontinuierlichen Kneterverfahren hergestellt. Dazu wurde Acrylsäure mit Natronlauge kontinuierlich neutralisiert und mit Wasser verdünnt, so dass der Neutralisationsgrad der Acrylsäure 72 bis 74 mol% und der Feststoffgehalt (= Natriumacrylat und Acrylsäure) dieser Lösung ca. 37,3 Gew.-% betrug. Als Vernetzer wurde Polyethylenglykol-400-diacrylat in einer Menge von 0,90 Gew.-%, bezogen auf Acrylsäuremonomer, eingesetzt und der Vernetzer wurde dem Monomerstrom kontinuierlich zugemischt. Die Initiation erfolgte ebenfalls durch kontinuierliche Zumischung wässriger Lösungen der Initiatoren Natriumpersulfat, Wasserstoffperoxid und Ascorbinsäure gemäß den Angaben in WO 01/38402, wobei die genaue Dosierung vom Fachmann angepasst werden kann.

Das Polymer wurde auf einem Bandtrockner getrocknet, gemahlen und dann auf eine Korngröße von 150 bis 500 μm abgesiebt.

Das so hergestellte Grundpolymer weist folgende Eigenschaften auf:

CRC = 33,8 g/
AUL 0.3 psi = 21,8 g/g
FLR = 10,7 g/s
ASG = 0,66 g $cm^3$
Extrahierbare (16 h) = 9,4 Gew.%
pH =6.0-6.1

Partikelgrößenverteilung:

> 600 μm = 0,09 Gew.%
> 500 μm = 2,06 Gew.%
> 150 μm = 96,85 Gew.%
> 45 μm = 0,96 Gew.%
< 45 μm = 0,04 Gew.%

In einer Pilotanlage wurde dieses Grundpolymer mit der Oberflächennachvernetzungslösung besprüht und anschliessend getempert. Das Aufsprühen erfolgte in einem Mischer Schuggi®-Flexomix Type 100 D mit gravimetrischer Eindosierung des Grundpolymers und kontinuierlicher Massenfluss-kontrollierter Flüssigkeitsdosierung über Zweistoffdüsen. Alle nachfolgenden Mengenangaben beziehen sich auf eingesetztes Grundpolymer. Die Nachvemetzungslösung enthielt 0,12 Gew.-% 2-Oxazolidinon, 0,20 Gew.-% Boltorn H 40® (Perstorp Specialty Chemicals AB, SE), 0,50 Gew.-% Tricalciumphosphat C13-09® (Chemische Fabrik Budenheim KG, DE), 0,747 Gew.-% Isopropanol, 0,12 Gew.-% 1,2-Propandiol, 2,023 Gew.-% Wasser. Das Tricalciumphosphat wurde dabei zunächst in Wasser mit einem Hochgeschwindigkeitsrührer dispergiert und anschliessend alle anderen Reagenzien darin eingetragen und homogenisiert. Die Nachvernetzungslösung wurde auf das Grundpolymer aufgesprüht wobei die Flüssigkeitsdosierung ca. 3,5 bis 3,7 Gew.-% bezogen auf Polymer betrug. Das feuchte Polymer wurde direkt aus dem Schuggi-Mischer fallend in einen Reaktionstrockner NA-RA@ NPD 1.6 W überführt. Die Durchsatzrate Grundpolymer betrug ca. 60 kg/h und die Produkttemperatur des mit Dampf beheizten Trockners am Trocknerausgang betrug ca. 179°C. Dem Trockner war ein Kühler nachgeschaltet, der das Produkt rasch auf ca. 50°C abkühlte. Die genaue Verweilzeit im Trockner kann durch die Durchsatzrate des Polymers durch den Trockner exakt vorgegeben werden. Von der Verweilzeit im Trockner und der Produkttemperatur hängen die erzielbaren Eigenschaften des Endproduktes ab.

Das erhaltene Endprodukt hatte folgende Eigenschaften (Mittelwert aus 17 Proben):

CRC = 25,4 g/g
AUL 0.7 psi = 23,3 g/g
SFC = 185.x $10^{-7}$ $cm^3$ s $g^{-1}$
FSR = 0,27 g/g s

FLR = 10,9 g/s

ASG = 0,68 g/$cm^3$

Partikelgrößenverteilung:

> 600 μm = 0,8 Gew.%
> 500 μm = 3,9 Gew.%
> 400 μm = 30,6 Gew.%
> 300 μm = 36,8 Gew.%
> 150 μm = 26,1 Gew.%
> 106 μm = 1,8 Gew.%
< 106 μm = 0,1 Gew.%

Der Anteil an messbarem Abrieb betrug 8 ppm.

Beispiel 6

Es wurde verfahren wie unter Beispiel 6. Die Durchsatzrate an Grundpolymer wurde auf ca. 90 kg/h erhöht. Durch die verkürzte Verweilzeit ergaben sich folgende Eigenschaften:

CRC = 26,3 g/g
AUL 0.7 psi = 24,0 g/g
SFC = $138 \times 10^{-7}$ $cm^3$ s $g^{-1}$
FSR = 0,32 g $g^{-1}$ $s^{-1}$

Der Anteil an messbarem Abrieb betrug 10 ppm.

Tabelle 1:

| Beispiel | Additiv | CRC [g/l] | AUL 0.7 [g/g] | SFC [$10^{-7}cm^3s/g$] | FLR [g/s] | ASG [g/ml] | Abrieb vor Mühle [ppm] | Abrieb nach Mühle [ppm] | Anti-Caking Test |
|---|---|---|---|---|---|---|---|---|---|
| 1 | | 30,9 | 23,3 | 45 | 10,4 | 0,68 | 2 | 26 | sehr schlecht |
| 2 | 0,5 Gew.-% Boltorn® H40 | 29,7 | 22,3 | 33 | 9,4 | 0,64 | 1 | <10 | n.d. |
| 3 | 0,5 Gew.% Kalziumtriphosphat | 30,9 | 23,1 | 35 | 9,5 | 0,65 | 31 | 99 | sehr gut |
| 4 | 0,5 Gew.-% Kalziumtriphosphat 0,5 Gew.-% Boltorn® H40 | 30,4 | 24,0 | 62 | 10,1 | 0,67 | 1 | 4 | sehr gut |

**Patentansprüche**

1. Quellbares hydrogelbildendes Polymer enthaltend mindestens ein hydrophiles Polymer mit dendritischer Struktur und mindestens ein wasserunlösliches Phosphat.

2. Polymer gemäß Anspruch 1, wobei das hydrophile Polymer mit dendritischer Struktur ein Polyester aus einem Polyol und 2,2-Dimethylolpropionsäure ist.

3. Polymer gemäß Anspruch 1, wobei das hydrophile Polymer mit dendritischer Struktur ein Polypropylenimin, ein Polyamidoamin oder ein Polyesteramid ist.

4. Polymer gemäß einem der Ansprüche 1 bis 3, wobei das wasserunlösliche Phosphat ein Kalziumphosphat ist.

5. Polymer gemäß einem der Ansprüche 1 bis 4, welches zusätzlich ein pulverförmiges und/oder staubförmiges Additiv enthält.

6. Polymer gemäß Anspruch 5, wobei das Additiv ein Metallsalz, eine pyrogene Kieselsäure, ein Polysaccharid, ein nichtionischs Tensid, ein Wachs, und/oder Diatomeenerde ist.

7. Polymer gemäß einem der Ansprüche 5 oder 6, wobei das Additiv in Form von Mikrohohlkugeln vorliegt, deren Durchmesser von 1 bis 1000 $\mu$m beträgt, wobei die Wanddicke der Mikrohohlkugeln 1 bis 10 % des Durchmessers ausmacht.

8. Polymer gemäß einem der Ansprüche 1 bis 7, wobei der Anteil an Partikeln mit einem Durchmesser von weniger als 10 $\mu$m weniger als 50 Gew.-ppm beträgt.

9. Polymer gemäß einem der Ansprüche 1 bis 8, dadurch gekenntzeichnet, dass der Anteil an Partikeln mit einem Durchmesser von weniger als 10 $\mu$m nach mechanischer Belastung weniger als 50 Gew.-ppm beträgt.

10. Polymer gemäß einem der Ansprüche 1 bits 9, **dadurch gekennzeichnet, dass** mindestens 90 Gew.-% der Partikel einen Durchmesser zwischen 150 und 500 $\mu$m aufweisen und die CRC mindestens 25 g/g, die AUL mindestens 22 g/g und die SFC mindestens $80 \times 10^{-7}$ $cm^3$ s $g^{-1}$ beträgt.

11. Polymer gemäß einem der Ansprüche 1 bis 9, **dadurch gekennzeichnet, dass** mindestens 90 Gew.-% der Partikel einen Durchmesser zwischen 100 und 600 $\mu$m aufweisen und die CRC mindestens 25 g/g, die AUL mindestens 22 g/g und die SFC mindestens $60 \times 10^{-7}$ $cm^3$ s $g^{-1}$ beträgt.

12. Polymer gemäß Anspruch 11, **dadurch gekennzeichnet, dass** mindestens 95 Gew.-% der Partikel einen Durchmesser zwischen 100 und 600 $\mu$m aufweisen.

13. Polymer gemäß Anspruch 11 oder 12, **dadurch gekennzeichnet, dass** mindestens 99 Gew.-% der Partikel einen Durchmesser zwischen 100 und 600 $\mu$m aufweisen.

14. Polymer gemäß einem der Ansprüche 1 bis 13, **dadurch gekennzeichnet, dass** die CRC mindestens 26 g/g und die AUL mindestens 23 g/g beträgt.

15. Polymer gemäß einem der Ansprüche 1 bis 14, **dadurch gekennzeichnet, dass** die CRC mindestens 30 g/g und die AUL mindestens 25 g/g beträgt.

16. Polymer gemäß einem der Ansprüche 1 bis 15; **dadurch gekennzeichnet, dass** die SFC mindestens $80 \times 10^{-7}$ $cm^3$ s $g^{-1}$ beträgt

17. Polymer gemäß einem der Ansprüche 1 bis 15, **dadurch gekennzeichnet, dass** die SFC mindestens $120 \times 10^{-7}$ $cm^3$ s $g^{-1}$ beträgt.

18. Verfahren zur Herstellung eines quellbaren hydrogelbildenden Polymers, **dadurch gekennzeichnet, dass** man ein Hydrogel mit mindestens einem hydrophilen Polymer dendritischer Struktur und mindestens einem wasserunlöslichen Phosphat nachbehandelt.

19. Verfahren gemäß Anspruch 18, **dadurch gekennzeichnet, dass** man die Nachbehandlung zusammen mit einer Oberflächennachvernetzung durchführt.

20. Verfahren gemäß Anspruch 19, **dadurch gekennzeichnet, dass** das Lösungsmittel, weiches mindestens einen Oberflächennachvernetzer enthält, ein Gemisch aus isopropanol und Wasser ist.

21. Verwendung von hydrophilen Polymeren dendritischer Struktur zur Fixierung wasserunlöslicher Phosphate auf quellbaren hyrogelbildenden Polymerpartikeln.

## Claims

1. A swellable hydrogel-forming polymer comprising at least one hydrophilic polymer of dendritic structure and at least one water-insoluble phosphate.

2. The polymer according to claim 1 wherein said hydrophilic polymer of dendritic structure is a polyester formed from a polyol and 2,2-dimethylolpropionic acid.

3. The polymer according to claim 1 wherein said hydrophilic polymer of dendritic structure is a polypropyleneimine, a polyamidoamine or a polyesteramide.

4. The polymer according to any of claims 1 to 3 wherein said water-insoluble phosphate is a calcium phosphate.

5. The polymer according to any of claims 1 to 4 further comprising a powdery and/or dusty additive.

6. The polymer according to claim 5 wherein said additive is a metal salt, a pyrogenous silica, a polysaccharide, a nonionic surfactant, a wax and/or diatomaceous earth.

7. The polymer according to claim 5 or claim 6 wherein said additive is present in the form of hollow microspheres which are from 1 to 1000 $\mu$m in diameter and whose wall thickness comprises from 1% to 10% of said diameter.

8. The polymer according to any of claims 1 to 7 comprising less than 50 weight ppm of particles less than 10 $\mu$m in diameter.

9. The polymer according to any of claims 1 to 8 comprising less than 50 weight ppm of particles less than 10 $\mu$m in diameter after exposure to mechanical stress.

10. The polymer according to any of claims 1 to 9 wherein not less than 90% by weight of the particles are between 150 and 500 $\mu$m in diameter and which is **characterized by** a CRC of not less than 25 g/g, an AUL of not less than 22 g/g and an SFC of not less than $80 \times 10^{-7}$ $cm^3$ s $g^{-1}$.

11. The polymer according to any of claims 1 to 9 wherein not less than 90% by weight of the particles are between 100 and 600 $\mu$m in diameter and which is **characterized by** a CRC of not less than 25 g/g, an AUL of not less than 22 g/g and an SFC of not less than $60 \times 10^{-7}$ $cm^3$ s $g^{-1}$.

12. The polymer according to claim 11 wherein not less than 95% by weight of the particles are between 100 and 600 $\mu$m in diameter.

13. The polymer according to claim 11 or 12 wherein not less than 99% by weight of the particles are between 100 and 600 $\mu$m in diameter.

14. The polymer according to any of claims 1 to 13 **characterized by** a CRC of not less than 26 g/g and an AUL of not less than 23 g/g.

15. The polymer according to any of claims 1 to 14 **characterized by** a CRC of not less than 30 g/g and an AUL of not less than 25 g/g.

16. The polymer according to any of claims 1 to 15 **characterized by** an SFC of not less than $80 \times 10^{-7}$ $cm^3$ s $g^{-1}$.

17. The polymer according to any of claims 1 to 15 **characterized by** an SFC of not less than $120 \times 10^{-7}$ $cm^3$ s $g^{-1}$.

18. A process for preparing a swellable hydrogel-forming polymer, which comprises aftertreating a hydrogel with at least one hydrophilic polymer of dendritic structure and with at least one water-insoluble phosphate.

19. The process according to claim 18 wherein said aftertreating is carried out together with a surface-postcrosslinking operation.

20. The process according to claim 19 wherein the solvent which comprises at least one surface postcrosslinker is a

mixture of isopropanol and water.

21. The use of hydrophilic polymers of dendritic structure for binding water-insoluble phosphates on swellable hydrogel-forming polymeric particles.

**Revendications**

1. Polymère gonflant formant un hydrogel, contenant au moins un polymère hydrophile à structure dendritique et au moins un phosphate insoluble dans l'eau.

2. Polymère selon la revendication 1, dans lequel le polymère hydrophile à structure dendritique est un polyester d'un polyol et de l'acide 2,2-diméthylolpropionique.

3. Polymère selon la revendication 1, dans lequel le polymère hydrophile à structure dendritique est une polypropylèneimine, une polyamidoamine ou un polyesteramide.

4. Polymère selon l'une quelconque des revendications 1 à 3, dans lequel le phosphate insoluble dans l'eau est un phosphate de calcium.

5. Polymère selon l'une quelconque des revendications 1 à 4, dans lequel un additif poudreux et/ou pulvérulent est également contenu.

6. Polymère selon la revendication 5, dans lequel l'additif est un sel métallique, une silice pyrogénée, un polysaccharide, un tensioactif non ionique, une cire et/ou une terre de diatomées.

7. Polymère selon l'une quelconque des revendications 5 ou 6, dans lequel l'additif se présente sous la forme de microbilles creuses dont le diamètre est de 1 à 1 000 $\mu$m, l'épaisseur de paroi des microbilles creuses représentant 1 à 10 % du diamètre.

8. Polymère selon l'une quelconque des revendications 1 à 7, dans lequel la proportion de particules ayant un diamètre inférieur à 10 $\mu$m est inférieure à 50 ppm en poids.

9. Polymère selon l'une quelconque des revendications 1 à 8, **caractérisé en ce que** la proportion de particules ayant un diamètre inférieur à 10 $\mu$m après sollicitation mécanique est inférieure à 50 ppm en poids.

10. Polymère selon l'une quelconque des revendications 1 à 9, **caractérisé en ce qu'**au moins 90 % en poids des particules présentent un diamètre compris entre 150 et 500 $\mu$m et la CRC est d'au moins 25 g/g, l'AUL est d'au moins 22 g/g et la SFC est d'au moins 80 x $10^{-7}$ $cm^3$ s $g^{-1}$.

11. Polymère selon l'une quelconque des revendications 1 à 9, **caractérisé en ce qu'**au moins 90 % en poids des particules présentent un diamètre compris entre 100 et 600 $\mu$m et la CRC est d'au moins 25 g/g, l'AUL est d'au moins 22 g/g et la SFC est d'au moins 60 x $10^{-7}$ $cm^3$ s $g^{-1}$.

12. Polymère selon la revendication 11, **caractérisé en ce qu'**au moins 95 % en poids des particules présentent un diamètre compris entre 100 et 600 $\mu$m.

13. Polymère selon la revendication 11 ou 12, **caractérisé en ce qu'**au moins 99 % en poids des particules présentent un diamètre compris entre 100 et 600 $\mu$m.

14. Polymère selon l'une quelconque des revendications 1 à 13, **caractérisé en ce que** la CRC est d'au moins 26 g/g et l'AUL est d'au moins 23 g/g.

15. Polymère selon l'une quelconque des revendications 1 à 14, **caractérisé en ce que** la CRC est d'au moins 30 g/g et l'AUL est d'au moins 25 g/g.

16. Polymère selon l'une quelconque des revendications 1 à 15, **caractérisé en ce que** la SFC est d'au moins 80 x $10^{-7}$ $cm^3$ s $g^{-1}$.

**17.** Polymère selon l'une quelconque des revendications 1 à 15, **caractérisé en ce que** la SFC est d'au moins 120 x $10^{-7}$ $cm^3$ s $g^{-1}$.

**18.** Procédé de fabrication d'un polymère gonflant formant un hydrogel, **caractérisé en ce qu'**un hydrogel est post-traité avec au moins un polymère hydrophile à structure dendritique et au moins un phosphate insoluble dans l'eau.

**19.** Procédé selon la revendication 18, **caractérisé en ce que** le post-traitement est réalisé conjointement avec une post-réticulation de surface.

**20.** Procédé selon la revendication 19, **caractérisé en ce que** le solvant qui contient au moins un agent de post-réticulation de surface est un mélange d'isopropanol et d'eau.

**21.** Utilisation de polymères hydrophiles à structure dendritique pour la fixation de phosphates insolubles dans l'eau sur des particules polymères gonflantes formant un hydrogel.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 02060983 A
- WO 9213912 A
- WO 9422940 A
- EP 0679678 A
- EP 0755964 A
- US 5641561 A
- US 5589256 A
- DE 10131606
- US 4286082 A
- DE 2706135 C
- US 4340706 A
- DE 3713601 C
- DE 2840010 C
- DE 4344548 A
- DE 4020780 A
- DE 4015085 A
- DE 3917846 A
- DE 3807289 A
- DE 3533337 A
- DE 3503458 A
- DE 4244548 A
- DE 4219607 A
- DE 4021847 A
- DE 3831261 A
- DE 3511086 A
- DE 3118172 A
- DE 3028043 A
- DE 4418881 A
- EP 0801483 A
- EP 0455985 A
- EP 0467073 A
- EP 0312952 A
- EP 0205874 A
- EP 0499774 A
- DE 2612846 A
- EP 0205674 A
- US 5145906 A
- EP 0530438 A
- EP 0670073 A
- US 4057521 A
- US 4062817 A
- US 4525527 A
- US 4295987 A
- US 5011892 A
- US 4076663 A
- US 4931497 A
- US 5041496 A
- EP 0343427 A
- WO 0138402 A
- EP 0955086 A
- DE 1301566 A
- EP 0640330 A


### In der Beschreibung aufgeführte Nicht-Patentliteratur


- Römpp, Lexikon-Chemie. Georg Thieme Verlag, 898
- *Makromol. Chem.,* 1988, vol. 189, 2885
- **F.L. BUCHHOLZ ; A.T. GRAHAM.** Modern Superabsorbent Polymer Technology. Wiley-VCH, 1998, 77-84
- *Makromol. Chem.,* 1947, vol. 1, 169